# EUROPÄISCHE PATENTSCHRIFT

(11) **EP 3 663 132 B1**
(45) Veröffentlichungstag und Bekanntmachung des Hinweises auf die Patenterteilung: **01.02.2023**
(21) Anmeldenummer: 18209785.7
(22) Anmeldetag: 03.12.2018
(51) Int. Cl.: B60Q 1/00, B60Q 1/24, B60Q 1/44, B60Q 1/30, B60Q 1/26, B60Q 1/46, B60Q 1/52, G09F 19/18

(54) **SICHERHEITSRÜCKLEUCHTENANORDNUNG**
REAR SAFETY LIGHT ARRANGEMENT
AGENCEMENT D'UN FEUX ARRIÈRE DE SÉCURITÉ

(43) Veröffentlichungstag der Anmeldung: 10.06.2020
(73) Patentinhaber: Guntermann UG (haftungsbeschränkt), 33102 Paderborn (DE)
(72) Erfinder: Guntermann, Martin, 33102 Paderborn (DE)
(74) Vertreter: Wickord, Wiro

(56) Entgegenhaltungen:
- FR-A- 1 564 964
- US-A- 2 652 650
- US-A- 3 191 019
- US-A- 5 299 102
- US-A- 6 133 851
- US-A1- 2015 108 299
- US-A1- 2017 115 552
- US-A1- 2018 204 489
- US-B1- 10 239 445

## Beschreibung

Die Erfindung betrifft eine Sicherheitsrückleuchtenanordnung nach dem Oberbegriff des Patentanspruchs 1.

Im Straßenverkehr sind Auffahrunfälle eine bekannte Problematik mit oftmals gravierenden Folgen für die Insassen der kollidierenden Fahrzeuge. In der Regel geht einem Auffahrunfall eine Gefahrensituation voraus, die ein Bremsen des vorausfahrenden Fahrzeugs erfordert, wie beispielsweise das Auffahren auf ein Stauende. Der Auffahrunfall wird in der Regel verursacht, wenn diese Gefahrensituation durch das nachfahrende Fahrzeug beziehungsweise dessen Fahrer zu spät wahrgenommen und/oder infolge dessen ein zu geringer Sicherheitsabstand zum vorausfahrenden Fahrzeug eingehalten wird.

Bei Personenkraftwagen (Pkw) hat sich hierfür eine zusätzliche und oberhalb der vorhandenen Standardrückbeleuchtung vorgesehene Zusatzbremsleuchte seit längerem bewährt und ist in einigen Ländern bei neuzugelassenen Pkw sogar gesetzlich vorgeschrieben. Die Zusatzbremsleuchte erhöht die Wahrnehmung des insbesondere in Gefahrensituationen bremsenden Pkw durch nachfahrende Fahrzeuge und animiert deren Fahrer zu Auffahrunfälle vermeidenden Reaktionen, wie beispielsweise dem Einstellen eines erhöhten Sicherheitsabstands zu dem vorausfahrenden Pkw oder einer kollisionsvermeidenden Abbremsung des Fahrzeugs. Die Gefahr eines Auffahrunfalls wird durch die Zusatzbremsleuchte somit reduziert.

Nutzfahrzeuge und/oder Fahrzeuggespanne weisen in der Regel trotz einer hohen Fahrzeugrückseite keine Beleuchtung zusätzlich und/oder oberhalb zu ihrer vorhandenen Standardrückbeleuchtung an ihrer Fahrzeugrückseite auf. Ihre Standardrückbeleuchtung ist vergleichsweise tief und unterhalb einer Rampenhöhe einer Ladefläche der Nutzfahrzeuge und/oder Anhänger von Fahrzeuggespannen vorgesehen, wobei typische Rampenhöhen für Lastkraftwagen im Bereich von 130 cm ± 20 cm liegen. Insbesondere nachfahrende Nutzfahrzeuge, in denen die Fahrer in der Regel in einem erhöhten Führerhaus sitzen, bei Lastkraftwagen oftmals mit einer Sichthöhe von 2,5 m oder mehr über der Fahrbahn, nehmen diese derart tief positionierte Standardrückbeleuchtung oftmals schlecht wahr. Die Standardrückbeleuchtung eines vorausfahrenden Nutzfahrzeugs und/oder Fahrzeuggespanns liegt in einem unteren und schlecht wahrnehmbaren Bereich ihres Sichtfeldes. Zudem sind die Fahrer oftmals übermüdet oder durch Unterhaltungselektronik im Führerhaus vom Fahrgeschehen abgelenkt.

Zwar existieren grundsätzlich Assistenzsysteme für Nutzfahrzeuge, die einen ausreichenden Sicherheitsabstand zum vorausfahrenden Fahrzeug einhalten und ein zu dicht auffahrendes Fahrzeug im Notfall eigenständig abbremsen. In der Europäischen Union (EU) sind derartige Assistenzsysteme in einer ersten Stufe für seit November 2015 zugelassene luftgefederte Nutzfahrzeuge mit einem zulässigen Gesamtgewicht ab 8 t und in einer zweiten Stufe für ab November 2018 zugelassene luft- und stahlgefederte Nutzfahrzeuge mit einem zulässigen Gesamtgewicht ab 3,5 t vorgeschrieben. Auch wenn Nutzfahrzeuge mit Zulassung ab November 2015 beziehungsweise ab November 2018 in der EU mit derartigen Assistenzsystemen ausgestattet sein müssen, sind ältere Fahrzeuge damit in der Regel nicht ausgestattet, da ein Einbau beziehungsweise ein Nachrüsten mit einem hohen Aufwand verbunden ist. Die Assistenzsysteme sind zudem von den Fahrern häufig abgeschaltet, da diese, um Kraftstoffverbrauch zu sparen, im Windschatten des vorausfahrenden Fahrzeugs fahren.

Eine weitere Problematik ist, dass viele Fahrer unter hohem Zeitdruck stehen und sich zu waghalsigen Überholmanövern hinreißen lassen, bei denen sie ein vorausfahrendes Fahrzeug aus seinem Windschatten heraus überholen. Durch das dichte Auffahren beim Fahren im Windschatten ist die vorhandene und tief positionierte Standardrückbeleuchtung von vorausfahrenden Nutzfahrzeugen und/oder Anhängern von Fahrzeuggespannen oftmals außerhalb des Sichtfelds des Fahrers des nachfahrenden Nutzfahrzeugs.

Demzufolge sind die Fahrer von Nutzfahrzeugen einem besonders hohen Risiko von Auffahrunfällen ausgesetzt.

In der US 2018/0204489 ist ein Videodisplaysystem für Nutzfahrzeuge angegeben, mit dem sicherheitsrelevante Informationen, beispielsweise ein Bremssignal, auf einer Rückfläche des Nutzfahrzeugs gezeigt werden können.

Die US 2015/0108299 A1 gibt eine Sicherheitsrückleuchtenanordnung an, umfassend ein Fahrzeug und eine Sicherheitsrückleuchte. Die Sicherheitsrückleuchte weist ein Projektionsmodul zum Erzeugen einer Lichtprojektion mit einem optischen Warnsignal und eine Verbindungseinheit mit einem Montagekörper zur Montage der Sicherheitsrückleuchte auf. Das Projektionsmodul ist an einem flexibel einstellbaren Tragarm gehalten, welcher mit dem Montagekörper verbunden ist. Die Sicherheitsrückleuchte ist hierbei derart an dem Fahrzeug montierbar, dass das optische Warnsignal oberhalb einer Standardrückbeleuchtung des Fahrzeugs auf einer Fahrzeugrückseite abbildbar ist.

Aufgabe der vorliegenden Erfindung ist es, eine in der Montage und Handhabung einfache Sicherheitsrückleuchtenanordnung beziehungsweise Sicherheitsrückleuchte zu offenbaren, welche die Wahrnehmung, insbesondere in Gefahrensituationen, eines vorausfahrenden Fahrzeugs mit einer hohen, dem nachfahrenden Verkehr zugewandten Fahrzeugrückseite erhöht.

Insbesondere in Gefahrensituationen, die ein Abbremsen eines vorausfahrenden Fahrzeugs oder ein Fahren mit einer geringen Fahrgeschwindigkeit, wie beispielsweise in Stausituationen, erfordern, hilft eine von der erfindungsgemäßen Sicherheitsrückleuchte in einer erfindungsgemäßen Sicherheitsrückleuchtenanordnung auf die Fahrzeugrückseite abgebildete Lichtprojektion mit einem optischen Warnsignal, das vorausfahrende Fahrzeug und die Gefahrensituation besser wahrzunehmen. Somit können die nachfahrenden Fahrzeuge ihre Geschwindigkeit anpassen und einen größeren Sicherheitsabstand zum Fahrzeug der erfindungsgemäßen Sicherheitsrückleuchtenanordnung einstellen oder durch das zusätzliche Warnsignal der Lichtprojektion schneller reagieren, sodass ein Sicherheitsrisiko eines Auffahrunfalls reduziert ist.

Zur Lösung der Aufgabe weist die Erfindung die Merkmale des Patentanspruchs 1 auf.

Der besondere Vorteil der Erfindung besteht in der von dem Projektionsmodul der Sicherheitsrückleuchte an der Fahrzeugrückseite oberhalb der Standardbremsleuchten abgebildeten Lichtprojektion mit wenigstens einem optischen Warnsignal. Dadurch, dass die Lichtprojektion mit dem optischen Warnsignal nur bei Ausgabe eines Bremssignals der Bremsanlage auf der Fahrzeugrückseite des Fahrzeugs abgebildet ist, fungiert die Lichtprojektion als gut wahrnehmbares zusätzliches Bremssignal. Das Fahrzeug der erfindungsgemäßen Sicherheitsrückleuchtenanordnung wird somit besser vor Auffahrunfällen durch nachfahrende Fahrzeuge geschützt, da diese das optische Warnsignal der Lichtprojektion wahrnehmen und als Reaktion ihre Fahrgeschwindigkeit reduzieren und einen größeren Sicherheitsabstand einstellen können beziehungsweise ihr Fahrzeug rechtzeitig zum Stillstand abbremsen können.

Um eine gute Wahrnehmbarkeit des Fahrzeugs der erfindungsgemäßen Sicherheitsrückleuchtenanordnung durch nachfahrende Fahrzeuge zu gewährleisten, sollte die dem nachfahrenden Verkehr zugewandte Fahrzeugrückseite des Fahrzeugs der erfindungsgemäßen Sicherheitsrückleuchtenanordnung möglichst groß und vorzugsweise flächig ausgebildet sein, sodass sie als Projektionsfläche für eine möglichst große Lichtprojektion fungieren kann. Als flächige Fahrzeugrückseite wird eine zusammenhängende Oberflächenstruktur bezeichnet, die Unebenheiten und/oder Profilierungen und/oder Durchbrechungen und/oder Spalte und/oder Krümmungen aufweisen kann in der Art, dass sie als Projektionsfläche für eine noch gut wahrnehmbare Lichtprojektion fungieren kann. Im Straßenverkehr ist die Fahrzeugrückseite dem nachfahrenden Verkehr zugewandt und kann grundsätzlich durch das Fahrzeug selbst und/oder aus aufgeladener Fracht gebildet sein.

Nach einer bevorzugten Ausführungsform der Erfindung ist der Tragarm der Sicherheitsrückleuchte zum Einstellen eines Projektionsabstands des Projektionsmoduls von der Fahrzeugrückseite schräg zur Horizontalen und in einem Winkel von vorzugsweise 35° ± 20° gehalten.

Der Tragarm weist vorzugsweise zusätzlich einen geringen Deformationswiderstand auf, damit er im Falle eines Auffahrunfalls durch ein auffahrendes Fahrzeug auf die Fahrzeugrückseite in Richtung ebendieser einklappt. Dadurch ist sichergestellt, dass von dem Tragarm eine geringe Gefährdung für Insassen eines kollidierenden Fahrzeugs ausgeht.

Nach einer Weiterbildung der Erfindung ragt der Tragarm der Sicherheitsrückleuchte in eine Fahrzeuglängsrichtung vorzugsweise um maximal 100 cm und besonders bevorzugt um 30 cm ± 20 cm über die Fahrzeugrückseite hinaus. Der Tragarm ragt vorzugsweise nur so weit über die Fahrzeugrückseite hinaus, dass die Lichtquelle ausreichend beabstandet ist, um die Lichtprojektion auf die Fahrzeugrückseite zu werfen, ohne dass dafür eine zusätzliche Warneinrichtung, wie beispielsweise eine Signalfahne oder eine Signalleuchte oder ein Signalkegel, benötigt wird.

Nach einer Weiterbildung der Erfindung sind der Tragarm und/oder das Projektionsmodul der Sicherheitsrückleuchte drehbar gelagert und/oder längenvariabel und vorzugsweise ausziehbar und/oder ist das Projektionsmodul jedenfalls abschnittsweise verschiebbar entlang des Tragarms geführt derart, dass ein Projektionsabstand und/oder ein Projektionswinkel zwischen dem Projektionsmodul und der Fahrzeugrückseite einstellbar ist. Dadurch kann die Lichtprojektion jeweils auf die als Projektionsfläche dienende Fahrzeugrückseite verschiedener Fahrzeuge und/oder Anhänger angepasst beziehungsweise fokussiert werden. Der verstellbare Projektionsabstand ist dabei maßgeblich für die Größe der Projektionsfläche der Lichtprojektion, wohingegen die Projektionswinkel in vertikaler als auch in horizontaler Richtung die Position der Lichtprojektion auf der Fahrzeugrückseite bestimmen.

Nach einer Weiterbildung der Erfindung weist die auf der Fahrzeugrückseite abgebildete Lichtprojektion eine Projektionsbreite von maximal einer Fahrzeugbreite des Fahrzeugs und vorzugsweise im Bereich von 50 cm bis 245 cm und besonders bevorzugt im Bereich von 150 cm bis 200 cm auf und/oder verläuft die auf der Fahrzeugrückseite abgebildete Lichtprojektion in einer vertikalen Richtung von einer Projektionsunterkante zu einer Projektionsoberkante, wobei die Lichtprojektion eine Projektionshöhe vorzugsweise im Bereich von 125 cm ± 75 cm und besonders bevorzugt im Bereich von 150 cm ± 50 cm aufweist und wobei die Projektionsoberkante auf einer Vertikalhöhe unterhalb der Fahrzeugrückseitenhöhe der Fahrzeugrückseite des Fahrzeugs und bevorzugt im Bereich von 200 cm bis 400 cm und besonders bevorzugt im Bereich von 300 cm bis 350 cm angeordnet ist. Die Lichtprojektion ist in ihren Abmaßen so bemessen, dass sie nicht über die Fahrzeugrückseite hinausstrahlt und beispielsweise entgegenkommende Fahrzeuge oder Flugzeuge blendet. Gleichzeitig ist die Lichtprojektion möglichst groß bemessen, um eine möglichst gute Wahrnehmung beziehungsweise Signalwirkung zu erzielen.

Nach der Erfindung weist die Verbindungseinheit zur Montage an einen Eckbeschlag eines auf dem Fahrzeug aufgeladenen Containers und/oder einer Wechselbrücke einen zylindrischen Montagekörper auf, wobei der Montagekörper einstückig und/oder über Verbindungsmittel mit dem Tragarm verbunden ist und/oder wobei der Montagekörper Verbindungsaussparungen zum Durchführen von Montageverbindungsmitteln aufweist und/oder wobei der Montagekörper vorzugsweise formschlüssig in einer rückseitigen Beschlagaussparung des Eckbeschlags und/oder über die Montageverbindungsmittel gehalten ist.

Container und/oder Wechselbrücken mit Eckbeschlägen werden in der Regel mit einem sogenannten Twistlock, zu Deutsch einem "verdrehbaren Schloss", mit dem Untergestell eines Fahrzeugs verbunden. Dieses Verriegelungssystem weist einen verdrehbaren Schließbolzen auf, welcher in einer Offenstellung durch eine längsförmige und unterseitige Beschlagaussparung des Eckbeschlags durchführbar ist und in einer Verriegelungsstellung um vorzugsweise 90° gegenüber der Offenstellung gedreht ist. Um eine Kollision mit dem Twistlock zu vermeiden, weist der Montagekörper der erfindungsgemäßen Sicherheitsrückleuchte vorzugsweise eine korrespondierend zu dem Twistlock geformte, unterseitige Verriegelungsaussparung auf.

Die Verbindungseinheit der Sicherheitsrückleuchte ist vorzugsweise lösbar mit der Fahrzeugrückseite des Fahrzeugs verbunden. Geeignete Montageverbindungsmittel für die Montage des Montagekörpers sind insbesondere lösbare Montageverbindungsmittel, beispielsweise Schraubenverbindungsmittel.

Die Fahrzeugrückseite weist häufig eine Tür auf, welche zum Be-/Entladen des Fahrzeugs einen Zugang zu einem Laderaum des Fahrzeugs verschafft. Es ist hier vorzugsweise vorgesehen, dass die Sicherheitsrückleuchte unterhalb einer Tür der Fahrzeugrückseite anbringbar ist, ohne bei einem Verschwenken der Tür mit ebendieser zu kollidieren und deren Funktion zu beeinträchtigen. Das Projektionsmodul der Sicherheitsrückleuchte ist hierfür vorzugsweise gleich hoch oder auf einer geringeren Höhe gehalten als der Montagekörper der Verbindungseinheit.

Bei Fahrzeugen mit einer Klappe an der Fahrzeugrückseite, insbesondere zum Entladen des Fahrzeugs bei schräg aufgebocktem Laderaum, ist die Sicherheitsrückleuchte vorzugsweise aus dem Bereich der Fahrzeugrückseite herausschwenkbar angeordnet, sodass ein kollisionsfreies Öffnen der Klappe gewährleistet ist und die Sicherheitsrückleuchte beim Entladen nicht von der Fracht beschädigt wird.

Nach einer Weiterbildung der Erfindung ist die Lichtprojektion und/oder das optische Warnsignal durch dauerhaft projizierte und/oder pulsierend projizierte und/oder animierte Bildfolgen gebildet und/oder umfasst das optische Warnsignal Schriftzeichen und/oder Symbole. Mithilfe von Lichtprojektionen sind grundsätzlich vielfältige Anzeigemöglichkeiten denkbar. Das auf die Fahrzeugrückseite projizierte optische Warnsignal kann beispielsweise Verkehrs- und/oder Warnsymbole als auch Schriftzeichen beziehungsweise Text darstellen. Somit erschließt sich grundsätzlich ein weltweites Anwendungsgebiet für die erfindungsgemäße Sicherheitsrückleuchte.

Nach einer Weiterbildung der Erfindung ist die Sicherheitsrückleuchte über zwei oder mehr elektrischen Leitungen elektrisch kontaktiert mit einer Bremsleuchte und/oder mit Blinkleuchten der Standardrückbeleuchtung des Fahrzeugs und/oder zusammenwirkend mit einer Bremssteuereinheit der Bremsanlage. Die Sicherheitsrückleuchte ist somit ohne großen Aufwand mit dem Fahrzeug elektrisch kontaktierbar, indem die elektrischen Leitungen an den elektrischen Schaltkreis von wenigstens einer Bremsleuchte der vorhandenen Standardrückbeleuchtung angeschlossen werden.

Optional ist auch vorstellbar, dass die Sicherheitsrückleuchte kabellos, beispielsweise über eine Funkverbindung mit dem Fahrzeug innerhalb der Sicherheitsrückleuchtenanordnung zusammenwirkt.

Wenn die Sicherheitsrückleuchte zusätzlich an eine linksseitige und eine rechtsseitige Blinkleuchte der Standardbeleuchtung des Fahrzeugs angeschlossen ist, kann das Projektionsmodul bei einem eingehenden Warnblinksignal zusätzlich eine Lichtprojektion mit einem optischen Warnsignal auf der Fahrzeugrückseite abbilden. Hierfür sind vorzugsweise offene Leitungsenden vorgesehen.

Bei Montage der erfindungsgemäßen Sicherheitsrückleuchte an ein Nutzfahrzeug mit einer Anhängerkupplungseinheit ist es vorzugsweise denkbar, dass der Stecker der elektrischen Leitungen anstelle eines Anhängers an eine vorhandene Anhängersteckdose der Anhängerkupplungseinheit gekoppelt ist.

Es ist optional denkbar, dass das Fahrzeug der erfindungsgemäßen Sicherheitsrückleuchtenanordnung eine mit dem Stecker der elektrischen Leitungen der Sicherheitsrückleuchte koppelbare und mit der Bremsanlage des Fahrzeugs elektrisch kontaktierte Steckdose aufweist. Insbesondere bei Fahrzeugen, die Wechselfracht wie beispielsweise Container und/oder Wechselbrücken transportieren, ist in der Regel eine schnelle und damit wirtschaftliche Be-/Entladung der Wechselfracht zu realisieren. Dies erfordert eine schnelle elektrische De-/Kontaktierung der Sicherheitsrückleuchte.

Nach einer Weiterbildung der Erfindung ist zum Auswerten des Bremssignals und/oder eines Warnblinksignals des Fahrzeugs und/oder einer Fahrgeschwindigkeit des Fahrzeugs eine mit der Bremsanlage und/oder mit der Standardrückbeleuchtung des Fahrzeugs zusammenwirkende Steuereinheit vorgesehen. Die Steuereinheit kann sowohl als Bestandteil der Sicherheitsrückleuchte vorgesehen sein, als auch im Fahrzeug vorgesehen sein, beispielsweise in Form eines vorhandenen Steuergeräts.

Grundsätzlich sind bei einem Zusammenwirken der Sicherheitsrückleuchte mit einer Steuereinheit, insbesondere mit einer Steuereinheit die Fahrzeugdaten auswertet, vielfältige Anwendungsfälle denkbar.

Der Tragarm weist ein Hohlprofil auf, durch das die elektrischen Leitungen geführt sind. Dadurch sind die elektrischen Leitungen vor Witterungseinflüssen und/oder Verschmutzungen oder ähnlichem geschützt. Gleichzeitig sind die elektrischen Leitungen in dem Hohlprofil versteckt, wodurch die erfindungsgemäße Sicherheitsrückleuchte eine ästhetische Erscheinung aufweist.

Das Projektionsmodul umfasst wenigstens eine Lichtquelle mit einer Leuchtdiodeneinheit und/oder mit einer Lasereinheit, bevorzugt mit einer Lasereinheit der Gefahrenklasse 1M und besonders bevorzugt mit einer Lasereinheit der Gefahrenklasse 1, und/oder umfasst zum Ausgleichen von Abbildungsfehlern der Lichtprojektion eine Optikeinheit.

Die Lichtquelle sollte grundsätzlich für das menschliche Auge unschädlich sein, sodass auch bei einer Fehlstellung der Sicherheitsrückleuchte im Betrieb eine Gefährdung von Personen ausgeschlossen werden kann. Leuchtdiodeneinheiten verfügen grundsätzlich über eine ausreichend hohe Lichtstromdichte, um eine gut wahrnehmbare Lichtprojektion abzubilden. Zudem sind sie für das menschliche Auge in der Regel unschädlich und erfordern daher keine speziellen Schutzvorkehrungen. Lasereinheiten verfügen funktionsbedingt durch ihre Lichtbündelung über eine hohe Lichtstromdichte. Die von einer Lichtquelle mit einer Lasereinheit geschriebene beziehungsweise abgebildete Lichtprojektion ist daher in der Regel gut wahrnehmbar. Lasereinheiten können jedoch für das menschliche Auge schädlich sein und erfordern teilweise hohe Schutzvorkehrungen. Für die Lichtquelle der erfindungsgemäßen Sicherheitsrückleuchte sind daher vorzugsweise Lasereinheiten der Gefahrenklasse 1 beziehungsweise 1 M vorgesehen. Diese sind unter vernünftigerweise vorhersehbaren Bedingungen für das menschliche Auge unschädlich und erfordern daher keine speziellen Sicherheitsvorkehrungen.

Eine Optikeinheit dient zum Fokussieren der erzeugten Lichtprojektion und weist hierfür bevorzugt wenigstens ein asphärisches Optikelement und besonders bevorzugt eine asphärische Linse und/oder einen asphärischen Parabolspiegel auf. Somit ist es realisierbar, die Lichtprojektion, trotz eines geringen Projektionsabstands zu einer Projektionsfläche, fokussiert und mit einer gut wahrnehmbaren Projektionshöhe abzubilden.

Ein Gehäuse des Projektionsmoduls ist jedenfalls abschnittsweise aus einem transparenten und/oder lichtdurchlässigen Material gefertigt. Somit sind die Optikeinheit und die Lichtquelle des Projektionsmoduls vor Witterungseinflüssen, Verschmutzungen oder ähnlichem durch das Gehäuse geschützt, wobei gleichzeitig ein von der Lichtquelle erzeugtes und durch die Optikeinheit fokussiertes Projektionslichtbündel durch das Gehäuse hindurchstrahlen kann und so die Lichtprojektion auf der Fahrzeugrückseite abbildbar ist.

Zum Enteisen des Projektionsmoduls ist es weiter denkbar, dass eine elektrisch betätigte Heizung in dem Gehäuse vorgesehen ist. Somit kann die erfindungsgemäße Sicherheitsrückleuchte grundsätzlich auch bei Frost, Schnee oder ähnlichen Witterungsbedingungen ohne funktionale Einschränkungen betrieben werden.

Das Gehäuse des Projektionsmoduls weist vorzugsweise eine kugelige und/oder eine halbkugelige Form auf. Es ist weiterhin denkbar, dass das Gehäuse des Projektionsmoduls zum Zweck einer Selbstreinigung rotiert, beispielsweise entlang einer starr gehaltenen Reinigungseinheit, wie insbesondere einer Bürste oder dergleichen. Hierdurch ist sichergestellt, dass die erfindungsgemäße Sicherheitsrückleuchte nicht infolge von Verschmutzungen oder Witterungsverhältnissen wie beispielsweise Schnee oder dergleichen funktional beeinträchtigt wird.

Die Steuereinheit empfängt ein Bremssignal der Bremsanlage und/oder ein an Blinkleuchten des Fahrzeugs ausgegebenes vorzugsweise pulsierendes Warnblinksignal und/oder empfängt und wertet ein von dem Fahrzeug ausgegebenes Fahrgeschwindigkeitssignal mit einem Fahrgeschwindigkeitswert des Fahrzeugs aus derart, dass
- bei ausgegebenem Warnblinksignal das Projektionsmodul zum Erzeugen einer Lichtprojektion mit wenigstens einem vorzugsweise zu dem Warnblinksignal korrespondierend pulsierenden optischen Warnsignal und/oder
- bei einem Fahrgeschwindigkeitswert unterhalb eines ersten Mindestfahrgeschwindigkeitswerts, vorzugsweise unterhalb von 20 Kilometern pro Stunde, das Projektionsmodul zum Erzeugen einer Lichtprojektion mit wenigstens einem vorzugsweise dauerhaften optischen Warnsignal unabhängig von dem Bremssignal durch die Steuereinheit eingeschaltet wird und/oder
- in einer Notbremssituation, in welcher das Fahrzeug bei einem Fahrgeschwindigkeitswert oberhalb eines zweiten Mindestfahrgeschwindigkeitswerts, vorzugsweise oberhalb von 50 Kilometern pro Stunde, mit einem hohen Bremspedaldruck und/oder mit einer hohen Bremspedalgeschwindigkeit durch die Bremsanlage derart abgebremst wird, dass zusätzlich zu einem von der Bremsanlage ausgegebenen Bremssignal das Warnblinksignal von dem Fahrzeug an die Blinkleuchten ausgegeben wird, wobei das Projektionsmodul zum Erzeugen einer Lichtprojektion mit wenigstens einem vorzugsweise pulsierenden optischen Warnsignal von der Steuereinheit eingeschaltet wird.

Aus der nachfolgenden Beschreibung sind weitere Vorteile, Merkmale und Einzelheiten der Erfindung zu entnehmen. Die Zeichnungen dienen lediglich beispielhaft der Klarstellung der Erfindung und haben keinen einschränkenden Charakter. Es zeigen:
- Fig. 1: eine perspektivische Ansicht auf ein erstes Ausführungsbeispiel einer Sicherheitsrückleuchte montiert an eine Fahrzeugrückseite eines Fahrzeugs,
- Fig. 2: eine perspektivische Ansicht auf ein zweites Ausführungsbeispiel der Sicherheitsrückleuchte montiert an einen Eckbeschlag eines Containers,
- Fig. 3: die Sicherheitsrückleuchte nach Fig. 1 in einer perspektivischen Ansicht mit verdeckten Kanten und
- Fig.4: die Sicherheitsrückleuchte nach Fig. 2 in einer perspektivischen Ansicht mit verdeckten Kanten.

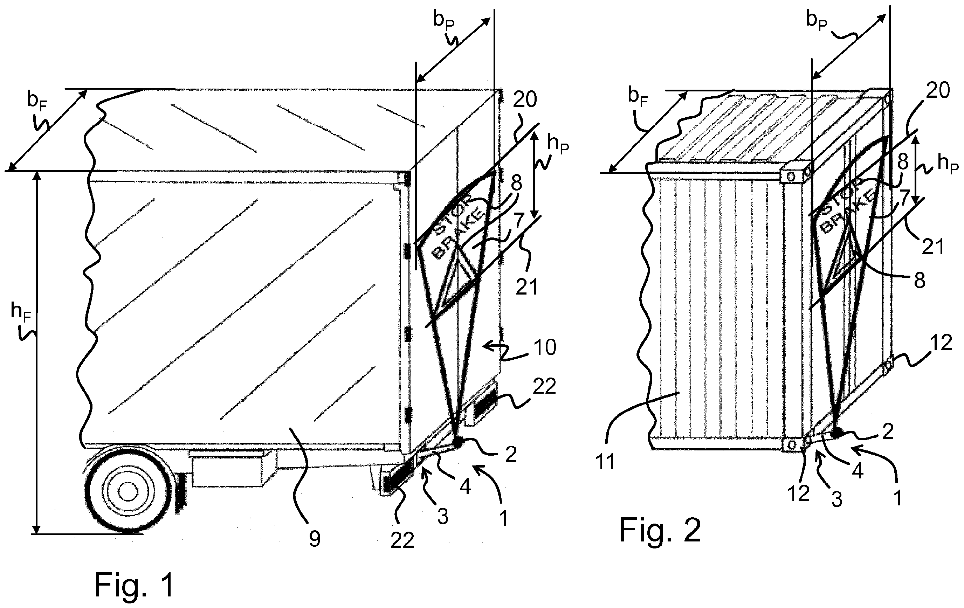

In den Fig. 1 bis Fig. 4 ist eine Sicherheitsrückleuchtenanordnung dargestellt, welche eine Sicherheitsrückleuchte 1 und ein Fahrzeug 9 umfasst. Die Sicherheitsrückleuchte 1 dient dabei zur besseren Wahrnehmung von Fahrzeugen 9, insbesondere von Nutzfahrzeugen und/oder Fahrzeuggespannen mit einer hohen Fahrzeugrückseite 10 mit einer Fahrzeugrückseitenhöhe h_{F} von wenigstens 150 cm.

Ein erstes Ausführungsbeispiel der Sicherheitsrückleuchtenanordnung in einer Montagestellung montiert an eine Fahrzeugrückseite 10 eines Fahrzeugs 9 zeigt Fig. 1. Die Sicherheitsrückleuchte 1 umfasst ein Projektionsmodul 2, mit einem Gehäuse und mit einer darin vorgesehenen Lichtquelle, zur Erzeugung einer Lichtprojektion 7. Ferner umfasst die Sicherheitsrückleuchte 1 eine Verbindungseinheit 3 zur Montage an die Fahrzeugrückseite 10. Ein Tragarm 4 der Verbindungseinheit 3 dient dazu, einen Projektionsabstand des Projektionsmoduls 2 zu der Fahrzeugrückseite 10 einzustellen, sodass die Lichtprojektion 7 in einem gut wahrnehmbaren horizontalen, als auch vertikalen Projektionswinkel auf die Fahrzeugrückseite 10 projiziert ist.

Die Sicherheitsrückleuchte 1 ist in diesem Ausführungsbeispiel auf einer Vertikalhöhe mit einer vorhandenen, rückseitigen Standardrückbeleuchtung 22 an einer Stoßstange und/oder an einem Untergestell des Fahrzeugs 9 gehalten. Der Tragarm 4 und das daran gehaltene Projektionsmodul 2 der Sicherheitsrückleuchte 1 sind unterhalb von rückseitigen Laderaumtüren des Fahrzeugs 9 positioniert, sodass ein Verschwenken der Laderaumtüren ohne eine funktionale Beeinträchtigung durch die Sicherheitsrückleuchte 1 gewährleistet ist.

Die Sicherheitsrückleuchte 1 soll die Lichtprojektion 7 in Gefahrensituationen, welche ein Bremsen erfordern, auf der Fahrzeugrückseite 10 abbilden. Hierzu ist die Sicherheitsrückleuchte 1 mit einer Bremsanlage des Fahrzeugs 9 verbunden, sodass die Lichtprojektion 7 mit optischen Warnsignalen 8 bei Ausgabe eines Bremssignals der Bremsanlage projiziert wird.

Die Lichtprojektion 7 soll möglichst großflächig auf der Fahrzeugrückseite 10 abgebildet sein, wobei sichergestellt werden muss, dass die Lichtprojektion 7 nicht über die Fahrzeugrückseite 10 hinaus leuchtet und beispielsweise entgegenkommende Fahrzeuge blendet. Aus diesem Grund muss sichergestellt sein, dass die Lichtprojektion 7 nicht über eine Fahrzeughöhe h_{F} des Fahrzeugs 9 hinausstrahlt und dass ferner eine Projektionsbreite b_{P} der Lichtprojektion 7 kleiner gleich einer Fahrzeugbreite b_{F} des Fahrzeugs 9 ist. In einer Vertikalrichtung weist die Lichtprojektion 7 eine Projektionshöhe h_{P} auf, welche von einer Projektionsoberkante 20 bis zu einer Projektionsunterkante 21 verläuft. Die Projektionshöhe h_{P} beträgt vorzugsweise 125 cm ± 75 cm und besonders bevorzugt 150 ± 50 cm. Die Projektionsoberkante 20 ist auf einer Vertikalhöhe unterhalb der Fahrzeughöhe h_{F} und vorzugsweise im Bereich von 200 cm bis 400 cm und besonders bevorzugt im Bereich von 300 cm bis 350 cm vorgesehen. Durch diese Abmessungen und Positionsangaben der Lichtprojektion 7 ist sichergestellt, dass diese mit einer gut wahrnehmbaren Größe auf der Fahrzeugrückseite 10 abgebildet ist, insbesondere auf einer Vertikalhöhe, welche in einem zentralen Bereich eines Sichtfensters eines Fahrers eines nachfahrenden Nutzfahrzeugs liegt.

Um die Wahrnehmung der Lichtprojektion 7 zu erhöhen, ist es denkbar, dass die optischen Warnsignale 8 dauerhaft projiziert und/oder pulsierend projiziert und/oder als animierte Bildfolgen auf der Fahrzeugrückseite 10 abgebildet sind. Die optischen Warnsignale 8 können beispielsweise Verkehrszeichen sowie Schriftzeichen und/oder Textfluss darstellen. Im Ausführungsbeispiel nach Fig. 1 zeigt die Lichtprojektion 7 ein optisches Warnsignal 8 in Form eines Warndreiecks, welches auf eine Gefahrensituation hindeutet und den deutschen Wortlaut "STOPP" oberhalb des englischen korrespondierenden Wortlauts "BREAK" darstellt. Für den Fahrer eines nachfahrenden Fahrzeugs ist somit gut wahrnehmbar, dass das mit der Sicherheitsrückleuchte 1 ausgestattete vorausfahrende Fahrzeug 9 ein Abbremsen initiiert. Der Fahrer des nachfahrenden Fahrzeugs kann entsprechend reagieren und seine Geschwindigkeit reduzieren beziehungsweise sein Fahrzeug rechtzeitig zum Stillstand bringen, um einen Auffahrunfall zu verhindern.

Fig. 2 zeigt ein zweites Ausführungsbeispiel der Sicherheitsrückleuchte 1 in einer Montagestellung montiert an einen rückseitigen Eckbeschlag 12 eines Containers 11. Die Sicherheitsrückleuchte 1 nach Fig. 2 ist Bestandteil einer erfindungsgemäßen Sicherheitsrückleuchtenanordnung, wenn ein derartiger Container 11 auf ein Fahrzeug 9 aufgeladen ist und dessen Fahrzeugrückseite 10 jedenfalls abschnittsweise definiert. Die Sicherheitsrückleuchte 1 ist formschlüssig über die Verbindungseinheit 3 in dem Eckbeschlag 12 gehalten.

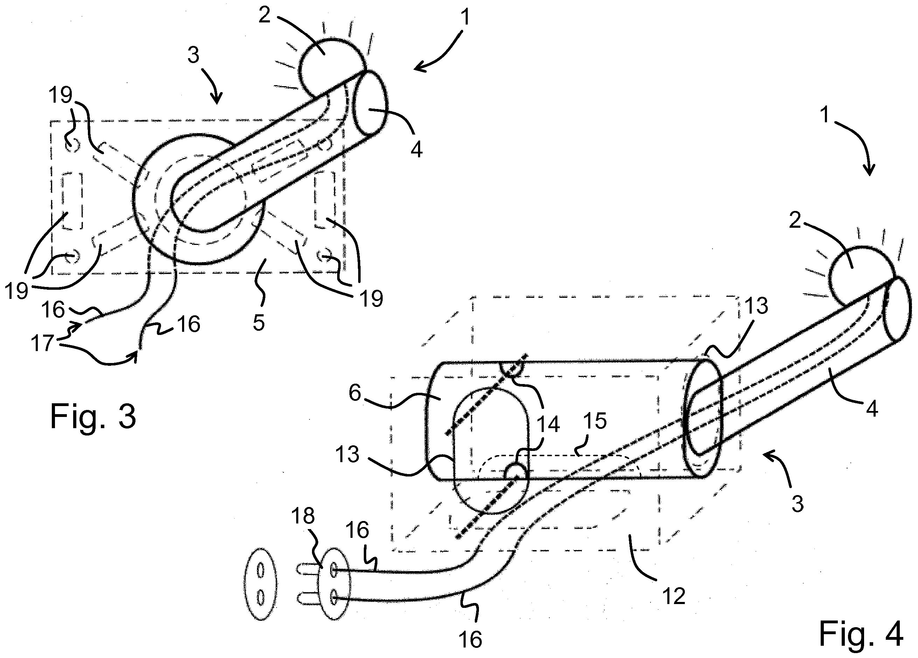

Das erste Ausführungsbeispiel der Sicherheitsrückleuchte 1 nach Fig. 1 ist in einer perspektivischen Ansicht mit verdeckten Kanten in Fig. 3 dargestellt. Die Verbindungseinheit 3 umfasst zur Montage der Sicherheitsrückleuchte 1 an einem Fahrzeug 9 eine Montageplatte 5, welche in diesem Ausführungsbeispiel einstückig und/oder stoffschlüssig mit dem schräg davon nach oben abragenden Tragarm 4 verbunden ist.

Der Tragarm 4 ist in diesem Ausführungsbeispiel hohlprofilförmig, sodass von dem Projektionsmodul 2 ausgehende elektrische Leitungen 16 durch den Tragarm 4 und durch die Montageplatte 5 durchführbar und vor Verschmutzungen beziehungsweise Witterungseinflüssen geschützt sind.

Die elektrischen Leitungen 16 dienen zum Verbinden der

Sicherheitsrückleuchte 1 mit der Bremsanlage des Fahrzeugs 9. In der Regel ist es ausreichend, die elektrischen Leitungen 16 an den Stromkreis der Bremsleuchten der vorhandenen Standardrückbeleuchtung 22 anzuschließen. Hierzu weisen die elektrischen Leitungen 16 in diesem Ausführungsbeispiel offene Enden 17 auf.

Bei Verwendung von Leuchtdioden und/oder spannungsüberwachten Leuchtmitteln in den vorhandenen Bremsleuchten der Standardrückbeleuchtung 22 des Fahrzeugs 9 ist ein geeignetes Schnittstellenmodul zum Betreiben der Lichtquelle vorzusehen. Rückseitige Stoßstangen und/oder Untergestelle von Fahrzeugen 9, insbesondere von Nutzfahrzeugen, weisen oftmals ungenutzte Durchbrechungen beziehungsweise Bohrungen auf. Für eine vereinfachte Montage der

Sicherheitsrückleuchte 1 mit dem Fahrzeug 9, weist die Montageplatte 5 in diesem Ausführungsbeispiel nach Fig. 3 eine Mehrzahl an Durchbrechungen 19 auf. Die Durchbrechungen 19 sind bohrungsförmig und/oder schlitzförmig, sodass Toleranzen bei der Montage leicht ausgeglichen werden können. Somit lässt sich die Montageplatte 5 über einfache Montageverbindungsmittel, wie vorzugsweise Schraubverbindungen, mit einem geringen Aufwand an die Fahrzeugrückseite 10 lösbar montieren.

Das in einem Eckbeschlag 12 eines Containers 11 gehaltene, zweite Ausführungsbeispiel der Sicherheitsrückleuchte 1 nach Fig. 2 ist in einer perspektivischen Darstellung mit verdeckten Kanten in Fig. 4 dargestellt. Zum formschlüssigen Verbinden der Sicherheitsrückleuchte 1 mit dem Eckbeschlag 12, weist die Verbindungseinheit 3 einen zylindrischen Montagekörper 6 auf, welcher formschlüssig in einer Beschlagaussparung 13 des Eckbeschlags 12 gehalten ist. Der Montagekörper 6 ist in diesem Ausführungsbeispiel einstückig und/oder stoffschlüssig mit dem schräg davon nach oben abragenden Tragarm 4 verbunden.

Der Tragarm 4 ist in diesem Ausführungsbeispiel nach Fig. 4 hohlprofilförmig, sodass von dem Projektionsmodul 2 abgehende elektrische Leitungen 16 durch den Tragarm 4 und durch den jedenfalls abschnittsweise hohlen Montagekörper 6 durchführbar sind. Die elektrischen Leitungen 16 sind somit vor Verschmutzungen, Umwelteinflüssen oder dergleichen geschützt.

Insbesondere bei einer Montage der Sicherheitsrückleuchte 1 an Wechselfracht, wie beispielsweise Containern 11 oder Wechselbrücken, ist eine schnelle De-/Montage beziehungsweise De-/Kontaktierung der elektrischen Leitungen 16 erforderlich, um eine wirtschaftliche Be- und Entladung der Wechselfracht zu realisieren. Die Sicherheitsrückleuchte 1 ist daher vorzugsweise lösbar über die Verbindungseinheit 3 mit dem Fahrzeug 9 verbunden und die elektrischen Leitungen 16 sind vorzugsweise über einen lösbaren Stecker 18 mit einer korrespondierenden Steckdose an dem Fahrzeug 9 kontaktiert.

Die elektrischen Leitungen 16 weisen in diesem Ausführungsbeispiel nach Fig. 4 einen Stecker 18 mit zwei Kontaktstiften auf. Für eine schnelle De-/Kontaktierung der Sicherheitsrückleuchte 1 an die vorhandene Bremsanlage und/oder Standardrückbeleuchtung 22 des Fahrzeugs 9 kann eine zu dem Stecker 18 korrespondierend geformte Steckdose an dem Fahrzeug 9 vormontiert werden.

Es ist ferner gut vorstellbar, dass der Stecker 18 korrespondierend zu einer Steckdose einer Anhängerkupplungsvorrichtung des Fahrzeugs 9 geformt ist, wodurch die Sicherheitsrückleuchte 1 anstelle eines Anhängers an das Fahrzeug 9 koppelbar ist. Der Montagekörper 6 weist Verbindungsaussparungen 14 auf, durch welche Montageverbindungsmittel durchführbar sind, beispielsweise Bolzen und/oder Schraubenverbindungen derart, dass ein Herausziehen des Montagekörpers 6 aus dem Eckbeschlag 12 verhindert ist und der Montagekörper 6 einen festen Halt in dem Eckbeschlag 12 aufweist.

Container 11 und/oder Wechselbrücken mit Eckbeschlägen 12 werden in der Regel mit einem sogenannten Twistlock, zu Deutsch einem "verdrehbaren Schloss", mit einem Untergestell des Fahrzeugs 9 verbunden. Dieses Verriegelungssystem weist einen verdrehbaren Schließbolzen auf, welcher durch eine längsförmige und unterseitige Beschlagaussparung 13 des Eckbeschlags 12 durchgeführt und anschließend um vorzugsweise 90° gedreht wird. Um eine Kollision mit dem Twistlock zu vermeiden, weist der Montagekörper 6 der Sicherheitsrückleuchte 1 der erfindungsgemäßen Sicherheitsrückleuchtenanordnung eine vorzugsweise korrespondierend zu dem Twistlock geformte, unterseitige Verriegelungsaussparung 15 auf. Die elektrischen Leitungen 16 können je nach Größe des Twistlocks wie in Fig. 4 dargestellt durch die unterseitige Beschlagaussparung 13 als auch durch seitliche Beschlagaussparungen 13 des Eckbeschlags 12 geführt sein. Die Figuren zeigen voneinander verschiedene Ausführungsbeispiele der Sicherheitsrückleuchte 1. Es werden lediglich die Unterscheidungsmerkmale der auf das erste Ausführungsbeispiel folgenden Ausführungsbeispiele zu dem ersten Ausführungsbeispiel erläutert. Im Übrigen stimmen die Ausführungsbeispiele überein.

Die Erfindung ist nicht auf die dargestellte Ausführungsform der Sicherheitsrückleuchte 1 beschränkt. Alternative Ausführungsformen der Sicherheitsrückleuchte 1 sind beispielsweise dadurch gebildet, dass diese an eine die Fahrzeugrückseite 10 jedenfalls abschnittsweise definierende Führerhausrückseite über eine geeignete Verbindungseinheit 3 montiert ist, beispielsweise für den Anwendungsfall, dass eine Sattelzugmaschine ohne einen Sattelauflieger unterwegs ist. Die Lichtprojektion 7 ist vielmehr auf Fahrzeugrückseiten 10 verschiedener Gestalt, Beschaffenheit und/oder Größe abbildbar, wobei die für die Lichtprojektion 7 als Projektionsfläche fungierende Fahrzeugrückseite 10 grundsätzlich aus festen Bestandteilen des Fahrzeugs 9 und/oder aus aufgeladener Fracht zusammengesetzt sein kann.

Ferner ist es denkbar, dass die Sicherheitsrückleuchte 1 an einem oberen Abschnitt der Fahrzeugrückseite 10 und/oder an einem oberen Eckbeschlag 12 eines die Fahrzeugrückseite 10 bildenden Containers 11 und/oder an einer Außenseite des Fahrzeugs 9 beziehungsweise der darauf aufgeladenen Fracht montiert ist. Gleiche Bauteile und Bauteilfunktionen sind durch gleiche Bezugszeichen gekennzeichnet.

### Bezugszeichenliste

- 1: Sicherheitsrückleuchte
- 2: Projektionsmodul
- 3: Verbindungseinheit
- 4: Tragarm
- 5: Montageplatte
- 6: Montagekörper
- 7: Lichtprojektion
- 8: Warnsignal
- 9: Fahrzeug
- 10: Fahrzeugrückseite
- 11: Container
- 12: Eckbeschlag
- 13: Beschlagaussparung
- 14: Verbindungsaussparung
- 15: Verriegelungsaussparung
- 16: elektrische Leitung
- 17: offenes Leitungsende
- 18: Stecker
- 19: Durchbrechung
- 20: Projektionsoberkante
- 21: Projektionsunterkante
- 22: Standardrückbeleuchtung
- b_{F}: Fahrzeugbreite
- b_{P}: Projektionsbreite
- h_{F}: Fahrzeugrückseitenhöhe
- hₒ: Projektionshöhe

## Patentansprüche

1. Sicherheitsrückleuchtenanordnung umfassend ein Fahrzeug (9), insbesondere ein Nutzfahrzeug und/oder ein Fahrzeuggespann mit einer Fahrzeugrückseite (10), die eine Fahrzeugrückseitenhöhe (h_{F}) von wenigstens 150 cm aufweist, wobei das Fahrzeug (9) eine Bremsanlage und eine mit der Bremsanlage zusammenwirkende Standardrückbeleuchtung (22) aufweist, weiter umfassend eine Sicherheitsrückleuchte (1) mit einem Projektionsmodul (2) zum Erzeugen wenigstens einer Lichtprojektion (7) und mit einer zur Montage an dem Fahrzeug (9) ausgebildeten Verbindungseinheit (3) mit einem Tragarm (4) und mit einem zylindrischen Montagekörper (6), wobei der Montagekörper (6) einstückig und/oder über Verbindungsmittel mit dem Tragarm (4) verbunden ist und Verbindungsaussparungen (14) zum Durchführen von Montageverbindungsmitteln aufweist, wobei die Sicherheitsrückleuchte (1) mit der Bremsanlage des Fahrzeugs (9) zusammenwirkt und über die Verbindungseinheit (3) an dem Fahrzeug (9) montiert ist derart, dass bei einer Ausgabe eines Bremssignals durch die Bremsanlage die Lichtprojektion (7) mit wenigstens einem optischen Warnsignal (8) oberhalb der Standardrückbeleuchtung (22) auf der Fahrzeugrückseite (10) abgebildet ist, **dadurch gekennzeichnet, dass** die Verbindungseinheit (3) zur Montage an einen Eckbeschlag (12) eines auf dem Fahrzeug (9) aufgeladenen Containers (11) und/oder einer Wechselbrücke den Montagekörper (6) aufweist, wobei der Montagekörper (6) vorzugsweise formschlüssig in einer rückseitigen Beschlagaussparung (13) des Eckbeschlags (12) und über die Montageverbindungsmittel gehalten ist und wobei der Montagekörper (6) eine korrespondierend zu einem Twistlock, mit dem der Container (11) und/oder die Wechselbrücke mit einem Untergestell des Fahrzeugs (9) verbunden ist, geformte, unterseitige Verriegelungsaussparung (15) aufweist.

2. Sicherheitsrückleuchtenanordnung nach Anspruch 1, **dadurch gekennzeichnet, dass** der Tragarm (4) der Sicherheitsrückleuchte (1) zum Einstellen eines Projektionsabstands des Projektionsmoduls (2) von der Fahrzeugrückseite (10) schräg zur Horizontalen und in einem Winkel von vorzugsweise 35° ± 20° geneigt angeordnet ist.

3. Sicherheitsrückleuchtenanordnung nach Anspruch 1 oder 2, **dadurch gekennzeichnet, dass** die auf der Fahrzeugrückseite (10) abgebildete Lichtprojektion (7) eine Projektionsbreite (b_{P}) von maximal einer Fahrzeugbreite (b_{F}) des Fahrzeugs (9) und vorzugsweise im Bereich von 50 cm bis 245 cm und besonders bevorzugt im Bereich von 150 cm bis 200 cm aufweist und/oder dass die auf der Fahrzeugrückseite (10) abgebildete Lichtprojektion (7) in einer vertikalen Richtung von einer Projektionsunterkante (21) zu einer Projektionsoberkante (20) verläuft, wobei die Lichtprojektion (7) eine Projektionshöhe (h_{P}) vorzugsweise im Bereich von 125 cm ± 75 cm und besonders bevorzugt im Bereich von 150 cm ± 50 cm aufweist und wobei die Projektionsoberkante (20) auf einer Vertikalhöhe unterhalb der Fahrzeugrückseitenhöhe (h_{F}) der Fahrzeugrückseite (10) des Fahrzeugs (9) und bevorzugt im Bereich von 200 cm bis 400 cm und besonders bevorzugt im Bereich von 300 cm bis 350 cm angeordnet ist.

4. Sicherheitsrückleuchtenanordnung nach einem der Ansprüche 1 bis 3, **dadurch gekennzeichnet, dass** der Tragarm (4) der Sicherheitsrückleuchte (1) in eine Fahrzeuglängsrichtung vorzugsweise um maximal 100 cm und besonders bevorzugt um 30 cm ± 20 cm über die Fahrzeugrückseite (10) hinausragt.

5. Sicherheitsrückleuchtenanordnung nach einem der Ansprüche 1 bis 4, **dadurch gekennzeichnet, dass** der Tragarm (4) und/oder das Projektionsmodul (2) der Sicherheitsrückleuchte (1) drehbar gelagert und/oder längenvariabel und vorzugsweise ausziehbar sind und/oder dass das Projektionsmodul (2) jedenfalls abschnittsweise verschiebbar entlang des Tragarms (4) geführt ist derart, dass ein Projektionsabstand und/oder ein Projektionswinkel zwischen dem Projektionsmodul (2) und der Fahrzeugrückseite (10) einstellbar ist.

6. Sicherheitsrückleuchtenanordnung nach einem der Ansprüche 1 bis 5, **dadurch gekennzeichnet, dass** die Lichtprojektion (7) und/oder das optische Warnsignal (8) durch dauerhaft projizierte und/oder pulsierend projizierte und/oder animierte Bildfolgen gebildet ist und/oder dass das optische Warnsignal (8) Schriftzeichen und/oder Symbole umfasst.

7. Sicherheitsrückleuchtenanordnung nach einem der Ansprüche 1 bis 6, **dadurch gekennzeichnet, dass** die Sicherheitsrückleuchte (1) über zwei oder mehr elektrischen Leitungen (16) elektrisch kontaktiert ist mit einer Bremsleuchte und/oder mit Blinkleuchten der Standardrückbeleuchtung (22) des Fahrzeugs (9) und/oder mit einer Bremssteuereinheit der Bremsanlage zusammenwirkt.

8. Sicherheitsrückleuchtenanordnung nach einem der Ansprüche 1 bis 7, **dadurch gekennzeichnet, dass** zum Auswerten des Bremssignals und/oder eines Warnblinksignals des Fahrzeugs (9) und/oder einer Fahrgeschwindigkeit des Fahrzeugs (9) eine mit der Bremsanlage und/oder mit der Standardrückbeleuchtung des Fahrzeugs (9) zusammenwirkende Steuereinheit vorgesehen ist.

## Claims

1. Rear safety light arrangement comprising a vehicle (9), in particular a utility vehicle and/or a towing vehicle and trailer having a rear vehicle face (10) having a rear vehicle face height (h_{F}) of at least 150 cm, the vehicle (9) having a braking system and standard rear lighting (22) which cooperates with the braking system, further comprising a rear safety light (1) having a projection module (2) for generating at least one light projection (7) and having a connection unit (3), formed for mounting on the vehicle (9) and having a support arm (4) and a cylindrical mounting body (6), the mounting body (6) being connected to the support arm (4) integrally and/or via connection means and having connection recesses (14) for passing mounting connection means through, the rear safety light (1) cooperating with the braking system of the vehicle (9) and being mounted on the vehicle (9) via the connection unit (3) in such a way that, when a braking signal is outputted by the braking system, the light projection (7) with at least one visual warning signal (8) is imaged on the rear vehicle face (10) above the standard rear lighting (22), **characterised in that** the connection unit (3) has the mounting body (6) for mounting on a corner fitting (12) of a container (11) loaded on the vehicle (9) and/or of a swap body, the mounting body (6) being held preferably positively in a rear-face fitting recess (13) of the corner fitting (12) and via the mounting connection means, and the mounting body (6) having a lower-face locking recess (15), formed in a manner corresponding to a twist lock connecting the container (11) and/or the swap bridge to an undercarriage of the vehicle (9).

2. Rear safety lighting arrangement according to claim 1, **characterised in that** the support arm (4) of the rear safety light (1) is arranged inclined obliquely to the horizontal and at an angle of preferably 35° ± 20° for adjusting a projection distance of the projection module (2) from the rear vehicle face (10).

3. Rear safety lighting arrangement according to either claim 1 or claim 2, **characterised in that** the light projection (7) imaged onto the rear vehicle face (10) has a projection width (bp) of at most a vehicle width (b_{F}) of the vehicle (9) and preferably in a range of 50 cm to 245 cm and particularly preferably in a range of 150 cm to 200 cm, and/or **in that** the light projection (7) imaged onto the rear vehicle face (10) extends in a vertical direction from a lower projection edge (21) to an upper projection edge (20), the light projection (7) having a projection height (h_{P}) preferably in a range of 125 cm ± 75 cm and particularly preferably in a range of 150 cm ± 50 cm, and the upper projection edge (20) being arranged at a vertical height below the rear vehicle face height (h_{F}) of the rear vehicle face (10) of the vehicle (9) and preferably in the range of 200 cm to 400 cm and particularly preferably in the range of 300 cm to 350 cm.

4. Rear safety lighting arrangement according to any of claims 1 to 3, **characterised in that** the support arm (4) of the rear safety light (1) projects over the rear vehicle face (10) in a vehicle longitudinal direction, preferably by at most 100 cm and particularly preferably by 30 cm ± 20 cm.

5. Rear safety lighting arrangement according to any of claims 1 to 4, **characterised in that** the support arm (4) and/or the projection module (2) of the rear safety light (1) are mounted rotatably and/or variable in length and preferably extendable, and/or **in that** the projection module (2) is, at least in portions, guided displaceably along the support arm (4) in such a way that a projection distance and/or a projection angle between the projection module (2) and the rear vehicle face (10) is adjustable.

6. Rear safety lighting arrangement according to any of claims 1 to 5, **characterised in that** the light projection (7) and/or the visual warning signal (8) are formed by image sequences which are projected permanently and/or projected flashing and/or animated, and/or **in that** the visual warning signal (8) comprises written characters and/or symbols.

7. Rear safety lighting arrangement according to any of claims 1 to 6, **characterised in that** the rear safety light (1) is in electrical contact, via two or more electrical lines (16), with a brake light and/or with flashing lights of the standard rear lighting (22) of the vehicle (9) and/or with a brake control unit of the braking system.

8. Rear safety lighting arrangement according to any of claims 1 to 7, **characterised in that**, to evaluate the braking signal and/or a flashing warning signal of the vehicle (9) and/or a vehicle speed of the vehicle (9), a control unit which cooperates with the braking system and/or with the standard rear lighting of the vehicle (9) is provided.

## Revendications

1. Agencement d'un feu arrière de sécurité comprenant un véhicule (9), en particulier un véhicule utilitaire et/ou un attelage de véhicule, avec une face arrière de véhicule (10) ayant une hauteur de face arrière de véhicule (hF) d'au moins 150 cm, dans lequel le véhicule (9) comporte un dispositif de freinage et un éclairage arrière standard (22) en interaction avec le dispositif de freinage, comprenant en outre un feu arrière de sécurité (1) avec un module de projection (2) pour produire au moins une projection lumineuse (7) et avec une unité de raccordement (3) configurée pour être montée sur le véhicule (9) avec un bras de support (4) et un corps de montage cylindrique (6), dans lequel le corps de montage (6) est raccordé au bras de support (4) d'un seul tenant et/ou par des moyens de raccordement et comporte des orifices de raccordement (14) pour le passage de moyens de montage, dans lequel le feu arrière de sécurité (1) interagit avec le dispositif de freinage du véhicule (9) et est monté sur le véhicule (9) par l'intermédiaire de l'unité de raccordement (3), de telle sorte que lorsqu'un signal de freinage est émis par le dispositif de freinage, la projection lumineuse (7) est reproduite sur la face arrière de véhicule (10) avec au moins un signal d'avertissement visuel (8) au-dessus de l'éclairage arrière standard (22), **caractérisé en ce que** l'unité de raccordement (3) comporte le corps de montage (6) pour le montage sur une ferrure d'angle (12) d'un conteneur (11) chargé sur le véhicule (9) et/ou d'un pont interchangeable, dans lequel le corps de montage (6) est de préférence maintenu par complémentarité de formes dans un évidement de ferrure arrière (13) de la ferrure d'angle (12) et par des moyens de montage, et dans lequel le corps de montage (6) comporte un évidement de blocage inférieur (15), formé en correspondance avec un verrou tournant avec lequel le conteneur (11) et/ou le pont interchangeable est assemblé à un châssis du véhicule (9).

2. Agencement d'un feu arrière de sécurité selon la revendication 1, **caractérisé en ce que** le bras de support (4) du feu arrière de sécurité (1) est agencé en biais par rapport à l'horizontale pour régler une distance de projection entre le module de projection (2) et la face arrière de véhicule (10), et incliné à un angle de préférence égal à 35° ± 20°.

3. Agencement d'un feu arrière de sécurité selon la revendication 1 ou 2, **caractérisé en ce que** la projection lumineuse (7) représentée sur la face arrière de véhicule (10) a une largeur de projection (bP) au maximum égale à une largeur de véhicule (bF) du véhicule (9) et de manière préférée dans la plage de 50 cm à 245 cm et de manière particulièrement préférée dans la plage de 150 cm à 200 cm et/ou **en ce que** la projection lumineuse (7) représentée sur la face arrière de véhicule (10) s'étend dans une direction verticale depuis un bord inférieur de projection (21) jusqu'à un bord supérieur de projection (20), dans lequel la projection lumineuse (7) a une hauteur de projection (hP) de manière préférée dans la plage de 125 cm ± 75 cm et de manière particulièrement préférée dans la plage de 150 cm ± 50 cm, et dans lequel le bord supérieur de projection (20) est agencé à une hauteur verticale inférieure à la hauteur de face arrière de véhicule (hF) de la face arrière de véhicule (10) du véhicule (9) et de manière préférée dans la plage de 200 cm à 400 cm et de manière particulièrement préférée dans la plage de 300 cm à 350 cm.

4. Agencement d'un feu arrière de sécurité selon l'une des revendications 1 à 3, **caractérisé en ce que** le bras de support (4) du feu arrière de sécurité (1) fait saillie au-delà de la face arrière de véhicule (10) dans une direction longitudinale de véhicule, de préférence d'un maximum de 100 cm et de manière particulièrement préférée de 30 cm ± 20 cm.

5. Agencement d'un feu arrière de sécurité selon l'une des revendications 1 à 4, **caractérisé en ce que** le bras de support (4) et/ou le module de projection (2) du feu arrière de sécurité (1) sont montés de façon à pouvoir tourner et/ou ont une longueur variable et sont de préférence extensibles et/ou **en ce que** le module de projection (2) est guidé dans tous les cas de manière à pouvoir être en partie déplacé le long du bras de support (4), de telle sorte qu'une distance de projection et/ou un angle de projection entre le module de projection (2) et la face arrière de véhicule (10) peut être réglé.

6. Agencement d'un feu arrière de sécurité selon l'une des revendications 1 à 5, **caractérisé en ce que** la projection lumineuse (7) et/ou le signal d'avertissement visuel (8) est formé par des séquences d'images projetées en continu et/ou projetées par intermittence et/ou animées et/ou **en ce que** le signal d'avertissement visuel (8) comprend des caractères et/ou des symboles.

7. Agencement d'un feu arrière de sécurité selon l'une des revendications 1 à 6, **caractérisé en ce que** le feu arrière de sécurité (1) est électriquement en contact, par l'intermédiaire de deux fils électriques (16) ou plus avec un feu de frein et/ou avec des feux clignotants de l'éclairage arrière standard (22) du véhicule (9) et/ou interagit avec une unité de commande de freinage du dispositif de freinage.

8. Agencement d'un feu arrière de sécurité selon l'une des revendications 1 à 7, **caractérisé en ce qu'**une unité de commande en interaction avec le dispositif de freinage et/ou avec l'éclairage arrière standard du véhicule (9) est prévue pour évaluer le signal de freinage et/ou un signal de détresse du véhicule (9) et/ou une vitesse de déplacement du véhicule (9).
